Europäisches Patentamt

European Patent Office

Office européen des brevets

(19)

(11) Publication number: **0 080 540**
**A1**

(12) **EUROPEAN PATENT APPLICATION**

(21) Application number: **81305643.9**

(22) Date of filing: **30.11.81**

(51) Int. Cl.³: **G 01 N 21/21**

(43) Date of publication of application:
**08.06.83 Bulletin 83/23**

(84) Designated Contracting States:
**DE FR GB**

(71) Applicant: **Tumerman, Leo**
**Melzer Street 10 Apt. 4**
**Rehovoth(IL)**

(72) Inventor: **Tumerman, Leo**
**Melzer Street 10 Apt. 4**
**Rehovoth(IL)**

(74) Representative: **Harvey, David G. et al,**
**Graham Watt & Co. Riverhead**
**Sevenoaks Kent TN13 2BN(GB)**

(54) **Method and apparatus for measuring quantities which characterize the optical properties of substances.**

(57) Optical parameters of a substance, including absorbancy, transmittency, turbidity and scattering coefficients, circular and linear birefringency, and circular and linear dichroism, are computed from phase or modulation coefficient measurements.

Monochromatic light obtained from a source (1) and monochromator (2) is linearly polarized by a polarizer (P) such that its polarization vector rotates at a definite frequency without affecting its intensity. The resulting beam is then directed at a sample station (6) and processed as necessary using a polarizing analyzer or quarter-wave plate, and the beam emerging from the sample station is focussed on a photodector (8) by focusing means (7), to generate an electrical output signal therein. The signal is fed to a phasemeter (16) or modulation coefficient detector (17) each coupled to a computer (18) and may be compared with reference signals obtained from a reference beam derived from the linearly polarized light emerging from the polarizer (P). Dichroism values are determined from modulation coefficient measurements and values of the other parameters noted above are obtained from relative phase measurements.

./...

Croydon Printing Company Ltd.

EP 0 080 540 A1

FIG. 1

"METHOD AND APPARATUS FOR MEASURING QUANTITIES WHICH
CHARACTERIZE THE OPTICAL PROPERTIES OF SUBSTANCES"

This invention relates to method and apparatus for measuring quantities which characterize the optical properties of substances.

More particularly, the invention relates to method and apparatus for measuring optical parameters of substances including absorption, transmittance, scattering and turbidity; circular and linear birefringence; and circular and linear dichroism.

Known in the prior art are various visual and photoelectric methods for measuring optical properties of substances. Known in the prior art also are many apparatuses for measuring the light absorption (spectrophotometers), light scattering (nephelometers), circular birefringency (spectropolarimeters) and circular dichroism (spectrodichrographs). With respect to the measurements of linear birefringency (double refraction) and linear dichroism, no instruments are to the best of my knowledge produced on a commercial basis. There exist only some laboratory devices for these measurements built in scientific institutes where they are needed.

Physical principles underlying the methods and

0080540

instruments are specific for the quantity to be measured. Therefore each of the known instruments can only measure one of the aforementioned optical quantities, and so - disadvantageously - separate instruments are required to measure the various quantities.

The aim of this invention has been to overcome this disadvantage and to improve the accuracy and sensitivity of optical measuring devices.

My proposed method for measuring all or any of the aforementioned optical quantities differs from the existing methods principally as follows. Firstly, a beam of linearly polarized light is used in all the measurements, the direction of polarization of which rotates with a definite frequency, but the intensity of which does not depend upon the orientation of the polarization vector. Secondly, the values of all the aforementioned optical quantities are computed from a measured value of the phase or the modulation coefficient of the alternating electric signal generated in a photodetector, e.g. a photomultiplier, by the said beam of light passing through the substance under investigation and through an analyzer or an achromatic quarter-wave retardating plate. The latter can be a duly set Babinet-Soleil Compensator.

My proposed apparatus for measuring all or any of the aforementioned optical quantities is based on the proposed method and contains the following essential components. These are firstly a light source and a monochromator. Secondly the apparatus includes a device to transform the monochromatic beam of light emerging from the monochromator into a beam of linearly polarized light whose polarization direction rotates with a definite frequency, but whose intensity does not depend upon the orientation of the polarization vector. Next, the apparatus includes devices to split the beam of light with rotating polarization direction into two partial beams with the same properties, and to focus both these partial beams on the same place of a photodetector, e.g. a photomultiplier. The apparatus further includes analyzers in both the said partial beams of light whose transmission directions are turned at an angle of $45^{\circ}$ with respect to each other.

My apparatus may furthermore include devices to rotate the analyzers, to effect changes in the transmission direction, and/or devices to rotate the sample under investigation, to effect changes in the transmission direction of the beam after it has passed through the sample.

An achromatic quarter-wave retardating plate, or a duly set Babinet-Soleil Compensator, can replace the analyzer in one of the partial beams of light.

Finally, my proposed apparatus features devices to measure the phase and/or the modulation coefficient of the electric signal generated in a photodetector by the light transmitted by the substance under investigation.

The general idea underlying the proposed method and apparatus is to replace measurements of the resulting signal intensity (as is typically done in the art) by measurements of its phase and/or of its modulation coefficient.

In its broadest aspect, the invention provides a method for measuring the values of quantities which characterize the optical properties of substances, including light absorption, transmittance, turbidity and scattering; circular and linear birefringence; and circular and linear dichroism, characterised by forming a beam of monochromatic, linearly polarized light the polarization vector of which rotates at a predetermined frequency and the intensity of which is independent of the orientation of the polarization vector; measuring the phase of an electric signal produced in a photodetector by the said beam of light after passage through a measuring path including a substance under investigation; or measuring the modulation coefficient of the electric signal produced in a photodetector by the said beam of light after passage through a measuring path including the substance under investigation.

For measuring absorbancy or transmittancy of a substance, the beam of light is split into two beams each possessing the same polarization characteristics. The two beams are then passed through respective polarizing analysers which are oriented at $45^{\circ}$ to each other. One of the resulting beams is passed through the substance under test, while the other is passed through a reference substance. The beams emerging from the substance under test and from the reference substance are then focussed on the photodetector, to produce an electric signal therein the phase of which is measured. Absorbancy or transmittance is then computed from the phase measurement.

Turbidity is computed from a measurement of the phase of the electric signal produced by the photodetector, the procedure otherwise being effectively the same as when measuring absorbency or transmittancy as outlined in the last paragraph.

Scattering coefficients are again computed from a measurement of the phase of the signal produced by the photodetector. Again, the beam of light is split into two beams which are passed through 45° oriented analyzers. One beam is then directed into the substance under test while the other is directed into a standard diffuser having known scattering coefficients. Beams of light scattered at definite angles to the beams incident on the substance and the standard diffuser are then focussed on the photodetector.

Circular birefringency is determined by passing the beam of light through the substance under test and then through an analyzer, the resulting beam then being focussed on the photodetector. Again the phase of the signal therein is measured. The procedure is repeated in the absence of the substance and the resulting phase is measured. A measurement of the circular birefringency is then computed from the measured phases.

Linear birefringency is determined rather similarly, by computation this time from a series of phase measurements. The phase measurements are determined for various orientations of a sample of the substance under test or of analyzer on the one hand, and for various orientations of the latter in the absence of the sample on the other hand.

Circular dichroism is determined from a measurement of the modulation coefficient of the electric signal produced in the photodetector. The beam of light is passed through a quarter-wave plate or an appropriately set Babinet-Soleil compensator and then through the substance under test before being focussed on the photodetector.

Linear dichroism is again determined from a modulation coefficient measurement. The beam of light is directed simply into the substance under test and the emerging beam is focussed on the photodetector.

The present invention also provides apparatus for measuring the values of quantities which characterise optical properties of substances, including light absorption, transmittance, turbidity and scattering, circular and linear birefringence, and circular and linear dichroism, said apparatus being characterised by means (1, 2 and P) for forming a beam of monochromatic, linearly polarized light the polarization vector of which rotates at a predetermined frequency and the intensity of which is independent of the orientation of the polarization vector, photodetector means (8) which produce an electrical signal in response to illumination by the said beam of light after passage through a measuring path including the substance under investigation, and measuring means (16, 17) for measuring the phase or the modulation coefficient of the said electrical signal produced in said photodetector means (8).

The invention and its practice will now be described in more detail by way of example, with reference to the accompanying drawings, in which:

Fig. 1 is a system diagram of apparatus according to the invention.

Fig. 2 is a schematic presentation of an arrangement for measuring the scattering coefficients of a substance.

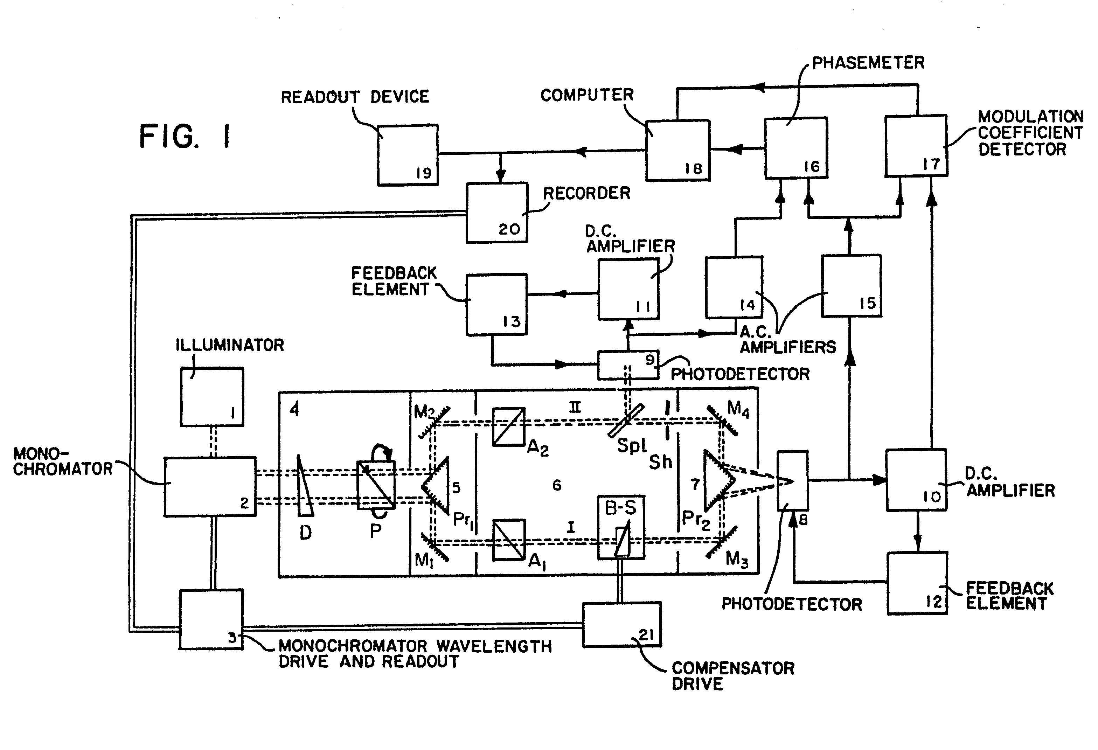

The exemplary embodiment of my apparatus is shown in block diagram form in Fig. 1. The apparatus has an illuminator 1 which contains a light source and an optical system for focusing the light on the entrance slit of a monochromator 2. The monochromator has a wavelength drive and readout instrument 3. The actinic output of the monchromator is transformed in a device 4 into linearly polarized light with a rotating polarization direction, the intensity of which does not depend upon the orientation of the polarization vector. This polarized light beam passes to a beam splitter 5 from which two partial beams emerge with the same polarization properties for traversing a sample in a sample compartment 6. From compartment 6 the light passes to a device 7 which focuses both the said partial beams of light on the same place of a photodetector's sensitive area.

- 10 -

0080540

8 and 9 are two photodetectors, e.g. photomultipliers, to which DC amplifiers 10, 11 and feedback devices 12, 13 are connected. The latter make the intensity of the signals generated in the respective detector independent of the intensity of light producing the signal. The outputs of the photodetectors 8, 9 are fed to two AC multipliers 14, 15 which in turn are coupled to a phasemeter 16 at their respective outputs. Output of multiplier 15 is also connected to a device 17 which measures the modulation coefficient of the resulting signal, i.e. the ratio of the signal's alternating component amplitude to the direct component.

A computer 18 is programmed to compute the values of the measured optical quantities from the measured value of the signal's phase or modulation coefficient. Inputs to the computer 18 comprise signals from the phasemeter 16 and from the modulation coefficient detector 17. Further components of the system are a readout device 19, a recorder 20 and a compensator drive 21 connected to the monochromator's drive and to a Babinet-Soleil Compensator B-S.

Optical components of the system include a depolarizer D, e.g. a $1^o$ quartz prism cut parallel to the crystal's optical axis. P, $A_1$ and $A_2$ are

polarizers, e.g. polarizing prisms and $M_1$ to $M_4$ are mirrors. $Pr_1$ and $Pr_2$ are rectangular prisms with reflecting faces. Further optical components are the Babinet-Soleil's Compensator (B-S), a beamsplitter Spl, and a shutter Sh.

In Figure 1, double dashed lines represent light beams, single solid lines represent electrical connections and double solid lines represent mechanical connections.

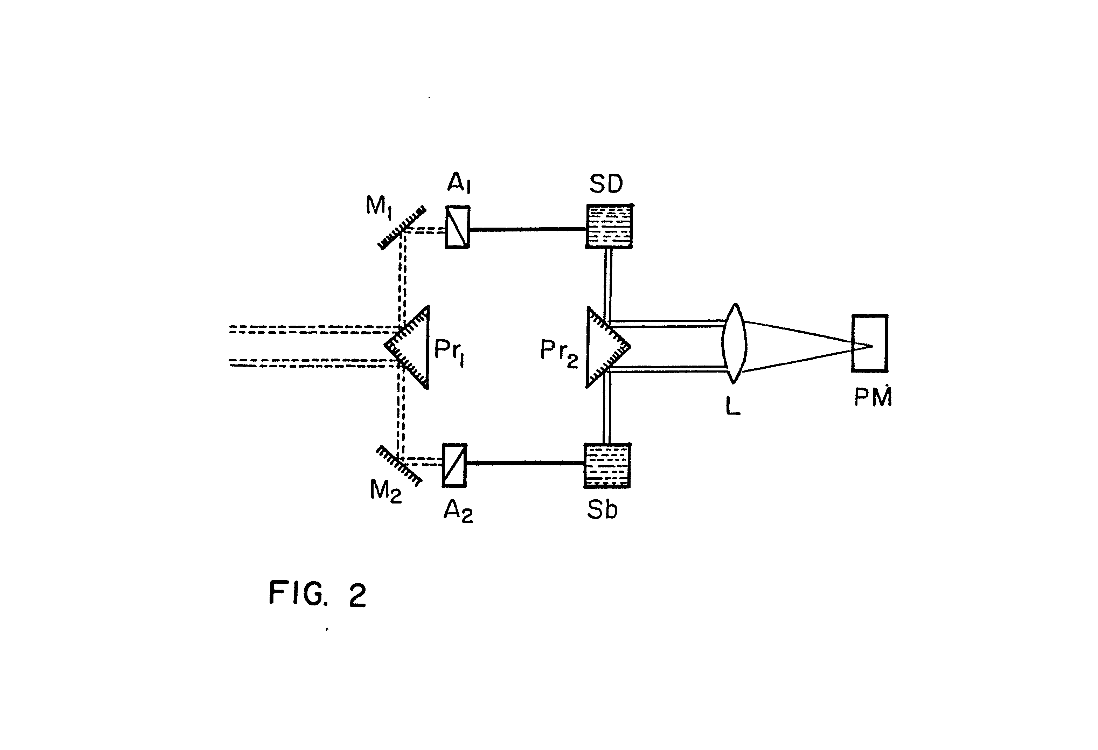

Fig. 2 schematically shows an arrangement for measuring the scattering coefficients of a substance, wherein $Pr_1$ and $Pr_2$ are prisms with reflecting faces and $M_1$ and $M_2$ are mirrors. SD is a standard diffusor while Sb is the substance under investigation. Scattered light beams emerging from the diffuser and sample cells are directed by prism $Pr_2$ to a lens L focused on photodetector PM, e.g. a photomultiplier.

In Fig. 2, the double dashed lines represent beams of light with a rotating polarization direction. Single solid lines represent linearly polarized light beams and double solid lines represent beams of light scattered by the standard diffuser or by the substance being investigated.

The system will now be described in more detail inter alia by reference to its function. .

Light emitted by a suitable light source, e.g. a Deuterium, Mercury, Xenon or Halogen Filament Lamp, is focused by the illuminator 1 on the entrance slit of the monochromator 2 equipped as usual by the wavelength drive assembly 3 and by a wavelength readout. The monochromator can be replaced by or supplemented with suitable optical filters.

The monochromatic beam of light emerging from the monochromator is transformed by the device 4 into a beam of linearly polarized light, whose polarization direction rotates with a definite cyclic frequency $\omega$. The intensity of the polarized light does not depend upon the orientation of the polarization vector. That can be done, e.g., by letting the light pass first through a depolarizer D, e.g. a crystalline quartz $1^{\circ}$ prism cut parallel to the quartz optical axis, and then through a rotating polarizer P, e.g. a polarizing prism or a Polaroid sheet (Polaroid is a Registered Trade Mark). Alternatively one could replace the depolarizer D by a fixed polarizer and the rotating polarizer by a known device to rotate the direction of the linearly polarized light.

The device 5 splits the said beam of light with the rotating polarization direction into two partial beams each having the same polarization properties. The device 5 can comprise the rectangular prism $Pr_1$ having reflecting (metallized) faces and by two mirrors $M_1$ and $M_2$, as shown on Fig. 1. Both these partial beams of light pass through the sample compartment 6 and are focused by the device 7 on the same place of the photosensitive area of a photodetector 8. The focusing device 7 can be a prism $Pr_2$ rather similar to the beam splitter device 5.

One of these beams (beam I on the Fig. 1) passes through the analyzer $A_1$ which can be replaced by the Babinet-Soleil compensator B-S or the achromatic quarter-wave plate in the case of the circular dichroism measurements. Depending on the characteristic being measured, the sample substance under investigation is placed into this beam of light either before or after the analyzer, or, in the case of circular dichroism measurements, after the compensator B-S.

The second partial beam of light (beam II in Fig. 1) passes through the analyzer $A_2$ whose transmission direction makes an angle of $45^o$ with that of the analyzer $A_1$. A part of the light transmitted by the analyzer $A_2$ is reflected by the beamsplitter Spl to the "reference" photodetector 9 e.g. a photomultiplier.

The beam II can be shut off by the shutter Sh after a part of it has been reflected to the detector 9, thus preventing it from reaching the focusing device 7.

The analyzers $A_1$ and $A_2$ transform the incident light with the rotating polarization direction into light with a fixed polarization direction whose intensity is proportional to $(1 + \cos 2\omega t)$. The direct components of the electric signals generated in the detectors 8 and 9 by the said beams of light are amplified by DC amplifiers 10 and 11 and are stabilized by the feedback devices 12 and 13 which control, e.g., the dynode voltage of the detectors 8 and 9 and make the intensity of the signal independent of the intensity of light acting on the detectors. The alternating parts of the said signals are amplified by the AC amplifiers 14 and 15 and fed to the inputs of the phasemeter 16 which measures the phase difference between them.

The device 17 measures the ratio of the amplitude of the alternating part of the signal generated in detector 8 to its direct part, i.e. the modulation coefficient of the said signal.

The measured values of the phase or modulation coefficient are transferred to a minicomputer 18 which computes the values of the measured optical
quantity as it will be described later.  The results
are displayed on the digital readout 19 and/or
recorded in analogue form by the recorder 20.
Alternatively they can be recorded in the digital
form by a printer or otherwise by known devices,
e.g. on magnetic tape or on punch cards.

### Measurements of light absorption

The absorption of light by a substance is characterised usually by the substance's transmittency $T = J:J_o$
or by its absorbency (optical density) $A = -\log T$.
($J$ and $J_c$ are the values of the intensity of light
incident on the substance and transmitted by it
respectively).

To measure the quantities T and A by the proposed
method and instrument, i.e. to use the instrument
as a spectrophotometer, we have:

a.  To place the substance under investigation,
e.g. the solution, into one of the beams of light I
or II and the reference substance, e.g. the solvent,
into the other beam, both samples being placed
after the corresponding analyzers $A_1$, $A_2$.

b.  To measure the phase of the resulting
signal produced in the photodetector 8 by the
simultaneous action of both the said beams of light thereon against the signal produced in the detector 9 by the reflected part of the beam II.

Since the analyzers $A_1$ and $A_2$ are oriented at an angle of $45^o$ with each other, the alternating parts of the electric signals produced by them are shifted in phase at an angle of $90^o$. It is easy to see now that the quantities T and A can be computed from the measured values of the said phase difference $\emptyset$:

$$T = \frac{\tan \emptyset_1}{\tan \emptyset_o} \; ; \quad A = \log \tan \emptyset_o - \log \tan \emptyset_1 \qquad (1a)$$

or

$$T = \left[\frac{\tan \emptyset_1}{\tan \emptyset_2}\right]^{\frac{1}{2}} \; ; \quad A = \frac{\log \tan \emptyset_2 - \log \tan \emptyset_1}{2} \qquad (1b)$$

$\emptyset_o$ is the phase difference measured in the absence of substances in both beams of light or in the presence of the same substance in both of them. $\emptyset_1$ is the phase difference measured when the substance under investigation is in the beam I and of the reference substance is in the beam II; and $\emptyset_2$ is the phase difference measured when the substance under investigation is placed in beam II and the reference substance is placed in the beam I.

Measurements of the circular birefringency

(optical rotation)

The circular birefringency (optical rotation) of a substance is characterized usually by the angle $\alpha$ through which the polarization plane of the incident linearly polarized light is turned by passing through the substance.

To measure this angle by the proposed method and instrument, i.e. to use the instrument as a spectropolarimeter, we have:

a. To place the substance under investigation into the beam I on the Fig. 1 before the analyzer $A_1$ and to close the shutter Sh in the second beam II.

b. To measure the phase of the resulting electric signal generated in the detector 8 by the light passing first through the substance and then through the analyzer against the signal generated in the detector 9 by the reflected part of the beam II.

If $\emptyset_s$ and $\emptyset_o$ are the values of the said phase difference measured in the presence and absence of the substance under investigation in the light beam I, then obviously

$$\alpha = \frac{\emptyset_s - \emptyset_o}{2} \qquad (2)$$

The sign of the optical rotation-determining

difference $(\phi_s - \phi_o)$ determines the direction of optical rotation.

### Measurements of the linear birefringency (double refraction)

The linear birefringency (or the double refraction) of a substance is characterized usually by the difference of its two "principal" refraction indices $n_o$ and $n_e$ which correspond to the ordinary and extraordinary ray respectively.

To simplify the calculations we assume that the substance under investigation is presented as a plane parallel plate whose surface is parallel to the substance's optical axis and is orthogonal to the direction of the incident beam of light possessing the rotating polarization plane. Since lightwaves polarized parallel and orthogonal to the optical axis propagate in a birefringent substance with different velocities, they leave the plate with a definite phase difference $\delta$. In other words, the linearly polarized light is transformed by passing through the substance into a light polarized elliptically.

The phase difference $\delta$ introduced by the plate is connected to the difference $\Delta n = n_o - n_e$ by the simple relationship:

$$\delta = \frac{2\pi\ell}{\lambda} \cdot \triangle n \qquad\qquad (3a)$$

where $\ell$ is the thickness of the plate and $\lambda$ the wavelength of the light in air.

In the proposed method and apparatus $\delta$ is measured directly and $\triangle n$ can be computed from (3a). To measure $\delta$ we have:

a. To place the sample of the substance into the beam of light I (Fig. 1) before the analyzer and to close the shutter Sh in the second beam II.

b. To measure the phase difference $\phi$ between the electric signal, generated in the detector 8 by the light beam I passing first through the substance under investigation and then through the analyzer $A_1$ against the reference signal generated in the detector 9 by the reflected part of the beam II.

To show how the phase difference $\delta$ between the light waves can be computed from the measured phase difference $\phi$ between the said electrical signals we shall describe the light beams by the four dimensional Stokes vectors $(J; P_1; P_2; P_3)$ whose first component is the beam's intensity and the other three components describe its state of polarization. The action of an optical medium, e.g. a birefringent plate or a polarizer, on the light passing through this substance can be described by a suitable Müller's matrix. One can find the Stokes vector for the light transmitted by the medium by multiplying the Stokes vector of the incident light by the corresponding Müller's matrix.

We choose the transmission direction of the analyzer $A_1$ as the OX-axis of the system of coordinates in the plane orthogonal to the light beam I. Then the Müller's matrix for the polarizer $A_1$ is:

$$\left|P_o\right| = \begin{vmatrix} 1 & 1 & 0 & 0 \\ 1 & 1 & 0 & 0 \\ 0 & 0 & 0 & 0 \\ 0 & 0 & 0 & 0 \end{vmatrix}$$

The Müller's matrix for the birefringent plate is

$$\left|B_\alpha\right| = \begin{vmatrix} 1 & 0 & 0 & 0 \\ 0 & \cos^2 2\alpha + \sin^2 2\alpha \cos\delta & \sin 2\alpha \cos 2\alpha (1-\cos\delta) & -\sin 2\alpha \sin\delta \\ 0 & \sin 2\alpha \cos 2\alpha (1-\cos\delta) & \sin^2 2\alpha + \cos^2 2\alpha \cos\delta & \cos 2\alpha \sin\delta \\ 0 & \sin 2\alpha \sin\delta & -\cos 2\alpha \sin\delta & \cos\delta \end{vmatrix}$$

where $\alpha$ is the angle the direction of fast oscillations of the substance makes with the OX-axis (See e.g. Walker, M.I., Matrix calculus and the Stokes parameters of polarized radiation, Amer. J. Phys., vol. 22, p. 170, 1954 or McMaster, W.H., Matrix representation of polarization, Rev. mod. Phys., vol. 33, p. 8, 1961).

If we assume that the polarization direction of the incident beam of light with rotating polarization plane is parallel to the OX-axis at the moment $t = 0$, then the Stokes vector for the incident beam of light is:

$$\begin{vmatrix} J \\ P_1 \\ P_2 \\ P_3 \end{vmatrix} = \begin{vmatrix} 1 \\ \cos 2\omega t \\ \sin 2\omega t \\ 0 \end{vmatrix}$$

The Stokes vector for the light beam which acts on the photodetector 8 is therefore:

$$\begin{vmatrix} J \\ P_1 \\ P_2 \\ P_3 \end{vmatrix} = \begin{vmatrix} P_0 \end{vmatrix} \cdot \begin{vmatrix} B_\alpha \end{vmatrix} \cdot \begin{vmatrix} 1 \\ \cos 2\omega t \\ \sin 2\omega t \\ 0 \end{vmatrix}$$

It is easy to show now by performing the multiplications that the intensity of the light acting on the detector 8 and therefore of the electric signal generated in this detector is proportional to

$$J = 1 + M \cos (2 \omega t - \psi)$$

where

$$M^2 = \left[\cos^2 2\alpha t + \sin^2 2\alpha t \cdot \cos \delta)\right]^2 + \left[\sin^2 2\alpha \cos 2\alpha(1-\cos\delta)\right]^2$$

and

$$\tan \psi = \frac{\sin 2\alpha \cdot \cos 2\alpha(1 - \cos \delta)}{\cos^2 2\alpha + \sin^2 2\alpha \cdot \cos \delta} \qquad (3b)$$

Since we measure the phase of the resulting signal against the signal generated in the detector 9 which is shifted $90^o$ relatively to the OX-axis, the measured phase difference $\emptyset = 90 - \psi$ and

$$\tan \emptyset = \frac{\cos^2 2\alpha + \sin^2 2\alpha \cdot \cos \delta}{\sin 2\alpha \cdot \cos 2\alpha(1 - \cos \delta)} \qquad (3c)$$

Obviously, $\emptyset = 90^o$ independently of the value of $\delta$ at $\alpha = 0$, i.e. when the direction of fast oxcillations in the plate is paralled to the transmission direction of the analyzer $A_1$. At any other orientation we can compute $\delta$ from the measured value of $\emptyset$ from (3c). The simplest way to do it is to make $2\alpha = 45^o$. Then

$$\tan \emptyset = \frac{1 + \cos \delta}{1 - \cos \delta} \qquad (3d)$$

0080540

$$\cos \delta = \frac{\tan \emptyset - 1}{\tan \emptyset + 1} \qquad (3e)$$

If the substance under investigation is both linearly and circularly birefringent, the values of both these quantities can be computed from the values of the signal's phase $\emptyset$ measured at $\alpha = 0^\circ$ and at any other value of $\alpha$, preferably at $\alpha = 22.5^\circ$. Angle may be selected by rotation of either the polarizing analyzer or the substance under investigation.

Measurements of the circular dichroism

The circular dichroism of a substance is characterized usually by the difference of its molar absorption coefficients $\varepsilon_d$ and $\varepsilon_l$ for the right-hand and left-hand circular polarized light:

$$\Delta_c = \varepsilon_d - \varepsilon_l$$

To measure $\Delta_c$ by the proposed method and instrument, i.e. to use the instrument as a spectrodichrograph, we have:

a. To replace the analyzer in one of the beams of light with the rotating polarization direction by the duly set Babinet-Soleil compensator which acts as an achromatic quarter-wave plate, and to shut off the second beam.

    b.  To place the substance under investigation into the said beam of light after the Babinet-Soleil compensator (the achromatic quarter-wave plate).

    c.  To measure the modulation coefficient of the electric signal generated in the photodetector by the said beam of light which passes first through the compensator and then through the substance under investigation.

It is easy to show that the quarter-wave plate transforms the incident light with the rotating polarization direction into light which can be described by the Stokes vector: $[J; \cos 2\omega t; 0; -\sin 2\omega t]$. The intensity of the transmitted beam of light remains constant, but its polarization state changes periodically from the left-hand circular polarization at $\omega t = 45^{\circ}$ to the right-hand circular polarization at $\omega t = 135^{\circ}$, passing through all the intermediate states of elliptical polarization, including the linear polarization at $\omega t = 0^{\circ}$ and $\omega t = 90^{\circ}$. This light can be regarded as a superposition of two light waves with the left-hand and the right-hand circular polarization, whose intensities are proportional to $\cos^2 \omega t$ and $\sin^2 \omega t$ respectively. When such light passes through a dichroic substance whose transmittency has different values $T_d$ and $T_\ell$ for the light right-hand and left-hand circularly polarized light, the intensity of the light transmitted by the substance, and therefore of the electric signal, is proportional to

$$I = 1 + M \cos (2\omega t)$$

wherein the modulation coefficient

$$M = \frac{T_\ell - T_d}{T_\ell + T_d}$$

Let C be the molar concentration of the substance in the sample and L the length of the way of light in it. Then

$$M = \frac{\exp(-L.C\varepsilon_\ell) - \exp(-L.C\varepsilon_d)}{\exp(-L.C.\varepsilon_\ell) + \exp(-L.C.\varepsilon_d)} = \tan h \left[ -\frac{L.C.\triangle_c}{2} \right] =$$

$$= \tan h \left[ \frac{\triangle_A}{2 \log e} \right]$$

The values of $\triangle_A$ are usually very small. Practically they do not exceed $10^{-3}$ to $10^{-2}$. We can therefore replace the hyperbolic tangent by its argument and compute $\triangle_c$ from

$$M = \frac{\text{L.C.} \, \triangle_c}{2} = \frac{\triangle_A}{2 \log e}$$

## Measurements of the linear dichroism

The linear dichroism of a substance can be characterized by the ratio of its minimal and maximal transmittency for the light linearly polarized in two orthogonal directions:

$$\triangle_1 = \frac{T_{min}}{T_{max}}$$

To measure the quantity $\triangle_1$ by the proposed method and instrument we have to let the beam of light with the rotating polarization direction to pass through the substance under investigation and to measure the modulation coefficient of the electric signal generated in the photodetector by the said beam of light.

Obviously,

$$M = \frac{T_{max} - T_{min}}{T_{max} + T_{min}}$$

and

$$\triangle_1 = \frac{1 - M}{1 + M} \qquad\qquad (5)$$

## Measurements of light scattering

The scattering of light by a substance can be characterized either by its turbidity T as defined by the Rayleigh equation:

$$\frac{J_{tr}}{J_o} = e^{-T \cdot L}$$

or by its scattering coefficients

$$S(\theta) = \frac{J(\theta)}{J_o}$$

which describe the spatial distribution of the light scattered by the substance.

Here $J_o$ is the intensity of the incident beam of light, $J_{tr}$ is the intensity of light transmitted by the substance and $J(\theta)$ is the intensity of light scattered at an angle $\theta$ to the direction of the incident beam of light.

The turbidity of a substance can be measured obviously exactly as the absorbency. To measure the scattering coefficients by the proposed method and instrument, i.e. to use the instrument as a spectronephelometer, we have:

a. To place a standard diffuser, whose coefficients of light scattering are known, into one of the beams I or II after the corresponding analyzer and to place the substance under investigation into the other beam;

b. To focus both the light scattered by the substance and the light scattered by the standard diffuser at a definite angle to the direction of the incident beam on the photodetector 8. A possible apparatus for this purpose is shown on Fig. 2;

c. To measure the phase of the electric signal generated in 8 against the reference signal produced in the detector 9 by the reflected part of the beam II.

If $\phi_1$ and $\phi_2$ are the values of the said phase difference measured with the substance under investigation being placed into the beam I or into the beam II respectively, then

$$\frac{S(\theta)}{S(\theta)_{st}} = \left[ \frac{\tan \phi_1}{\tan \phi_2} \right]^{\frac{1}{2}} \tag{6}$$

where $S(\theta)_{st}$ are the known scattering coefficients of the standard diffuser.

In the arrangement shown in Fig. 2 the light is scattered by the substance under investigation and by the standard diffuser at angle $\theta = 90^{\circ}$. It is

clear that it is possible also to measure by the same way the scattering coefficients for any other values of $\theta$.

To investigate the scattering of the unpolarized light we have only to place the depolarizer (or a duly oriented quarter-wave plate) between the analyzer and the light scattering substance.

By putting appropriately oriented polarizers into the beams of scattered light one can investigate the state of polarization of the scattered light too.

Claims:

1. A method for measuring the values of quantities which characterize the optical properties of substances, including light absorption, transmittance, turbidity and scattering; circular and linear birefringence; and circular and linear dichroism characterised by forming a beam of monochromatic, linearly polarized light the polarization vector of which rotates at a predetermined frequency and the intensity of which is independent of the orientation of the polarization vector; measuring the phase of an electric signal produced in a photodetector by the said beam of light after passage through a measuring path including a substance under investigation; or measuring the modulation coefficient of the electric signal produced in a photodetector by the said beam of light after passage through a measuring path including the substance under investigation.

2. A method according to claim 1, for measuring the absorbency or the transmittancy of a substance, characterised by splitting the said beam of light into two partial beams of light possessing the same polarization properties; passing the said partial beam of light through at least one of two optical polarization analyzers oriented at an angle of 45° with each other and then through the substance under investigation and through a reference substance, or blank, respectively; and focusing both the said beams of light emerging from the said substances on the photodetector; the measuring step being characterised by measuring the phase of the resulting electric signal produced in the detector by the action of both the said beams of light, and computing the values of the absorbency or transmittency in response to the phase measurement.

3. A method according to claim 1 for measuring the light scattering coefficients or the turbidity of a substance, characterised by splitting the said beam of light into two partial beams of light possessing the same polarization properties; passing the said partial beams of light through at least one of two optical polarization analyzers oriented at an angle of $45^{\circ}$ with each other and then respectively through the substance under investigation, and through a standard diffuser the scattering coefficients of which are known; and focusing the beams of light scattered at a definite angle to the incident beams by the substance under investigation and by the standard diffuser onto a photodetector; the measuring step being characterised by measuring the phase of the resulting electric signal and computing the values of either or both the substance's scattering coefficients and its tubidity in response to the phase measurement.

4. A method according to claim 1, for measuring circular birefringency (optical rotation) of a substance, characterised by passing the said beam of light first through the substance under investigation and then through an optical polarization analyzer; and focusing the said beam of light passed through the substance and through the analyzer on a photodetector; the measuring step being characterised by measuring the phase of the resulting electric signal produced in the detector in the presence of the substance in the beam of light, measuring the phase of the resulting electric signal in the absence of the substance in the beam of light, and computing a value of the circular birefringency of the substance in response to these phase measurements.

5. A method according to claim 1, for measuring linear birefringency of an anisotropic substance, characterised by passing the said beam of light first through the substance under investigation and then through an optical polarization analyzer; and focusing the said beam of light on the photodetector; and the measuring step being characterised by measuring the phase of the resulting electric signal
produced in the detector in the presence of the
substance in the beam of light at various
orientations of the substance or the analyzer,
measuring the phase of the resulting electric signal
in the absence of the substance in the beam of light
at various orientations of the analyzer, and computing
a value of the linear birefringency of the substance
in response to these phase measurements.

6. A method according to claim 1, for
measuring the circular dichroism of a substance,
characterised by passing the said beam of light first
through a quarter wave retarding plate, which can
be a duly set Babinet-Soleil compensator, then
through the substance under investigation; and
focusing the said beam of light on the photodetector;
and the measuring step being characterised by
measuring the modulation coefficient of the electric
signal produced in the detector by the said beam of
light after passage through the quarter wave plate
and the substance, and computing the value of the
circular dichroism of the substance in response
to the modulation coefficient measurement.

7. A method according to claim 1, for measuring
the linear dichroism of a substance, characterised by passing the said beam of light through the substance under investigation, and focusing the said beam of light on the photodetector; and the measuring step being characterised by measuring the modulation coefficient of the electric signal produced in the detector by the said beam of light after passage through the substance, and computing a value of the linear dichroism of the substance in response to the modulation coefficient measurement.

8. Apparatus for measuring the values of quantities which characterise optical properties of substances, including light absorption, transmittance, turbidity and scattering, circular and linear birefringence, and circular and linear dichroism, said apparatus being characterised by means (1, 2 and P) for forming a beam of monochromatic, linearly polarized light the polarization vector of which rotates at a predetermined frequency and the intensity of which is independent of the orietation of the polarization vector, photodector means (8) which produce an electrical signal in response to illumination by the said beam of light after passage through a measuring path including the substance under investigation, and measuring means (16, 17) for measuring the phase or the modulation coefficient of the said electrical signal produced in said photodetector means (8).

9.  An apparatus according to claim 1, for measuring the absorbency or the transmittancy of a substance, further characterised by a device (5) to split the said beam of light into two partial beams with the same polarization properties; two analyzers $(A_1, A_2)$ oriented at an angle of $45^o$ with each other one in each of the said partial beams of light; and means (7) to focus both the said partial beams of light after passage through the substance under investigation and through a reference substance or a blank onto the said photodetectors (8), the measuring means (16) being operative to measure the phase of the electric signal produced in the said photodetector (8) by action thereon of the two focused beams of light against a reference signal.

10.  An apparatus according to claim 9, further characterised by a second photodetector (9) for producing the said reference signal in response to the action thereon of a reflected part of one of the said beams emerging from its associated analyzer $(A_2)$

11.  An apparatus according to claim 1, for measuring the scattering coefficients or the turbidity of a substance, further characterised by a device (5) to split the said beam of light into two partial beams with the same polarization properties; two analyzers ($A_1$, $A_2$) oriented at an angle of $45^o$ with each other, one in each of the said partial beams of light; a device (7) to focus both the said partial beams of light after scattering at a definite angle to the direction of the incident beam by the substance under investigation and by a standard diffuser onto the said photodetector (8), and the measuring means (16) being operative to measure the phase of the electric signal produced in the said detector by action thereon of the two focused beams of light against a reference signal.

12. An apparatus according to claim 11 further characterised by a device (5) to split the said beam of light into two partial beams with the same polarization properties; two analyzers ($A_1$, $A_2$) oriented at an angle of $45^o$ with each other, one in each of the said partial beams of light; a device (7) to focus both the said partial beams of light after scattering at a definite angle to the direction of the incident beam by the substance under investigation and by a standard diffuser onto the said photodetector (8), and the measuring means (16) being operative to measure the phase of the electric signal produced in the said detector by action thereon of the two focused beams of light against a reference signal.

13. An apparatus according to claim 1, for measuring the linear birefringency of a substance, further characterised by an analyzer ($A_1$), means (7) to focus the beam of light after passage first through the substance under investigation and then through the analyzer ($A_1$) onto the detector (8) means to turn the sample substance or the analyzer ($A_1$) at various angles; and the measuring means (16) being operative to measure the phase of the electric signal produced in the detector (8) by the said beam of light against a reference signal.

14. An apparatus according to claim 13, wherein said reference signal is generated by said detector (8) in response to the said beam of light after passage solely through the analyzer ($A_2$).

15. An apparatus according to claim 1 for measuring the circular dichroism of a substance, further characterised by an achromatic quarter wave retardating plate or a Babinet-Soleil compensator (B-S) which can act as such a plate located between the beam forming means (1, 2 and P) and the substance and a device (7) to focus the said beam of light, after passage through the quarter wave plate or the Babinet-Soleil compensator and then through the substance under investigation, onto the detector (8), and the measuring means comprising a device (17) to measure the modulation coefficient of the electric signal produced in the detector by the said beam of light.

16. An apparatus according to claim 1, for measuring the linear dichroism of a substance, further characterised by a device (17) for measuring the modulation coefficient of the electric signal produced in the detector by the said beam of light emitted by the beam forming means (1, 2, P) after passage through the substance under investigation.

17. An apparatus according to claim 1, for measuring the circular birefringency (optical rotation) of a substance, further characterised by two optical polarization analyzers ($A_1$, $A_2$), two photodetectors (8, 9), a device (7) to focus onto one of the photodetectors the said beam of light after it has passed through one of the following: namely the substance under investigation, a blank, and a reference substance, and then through one of the analyzers

$(A_1, A_2)$ on one of the photodetectors; and the measuring means being operative to measure the phase of the electrical signal produced in the said one photodetector (8) against a reference signal produced in the other photodetector (9).

18. An apparatus according to claim 17, wherein the other photodetector (9) is operative to produce the reference signal in response to the action thereon of a reflected part of the beam from the beam producing means (1, 2, P) after polarization by passage through the other analyzer $(A_2)$.

19. An apparatus according to any of claims 8 to 18, wherein the beam forming means (1, 2 P) comprises a monochromator and/or optical filters supplementing or substituting for the monochromator.

FIG. I

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | PATENTS ABSTRACTS OF JAPAN, vol. 4, no. 1, 8th January 1980, page 100E-163;<br>& JP - A - 54 141 693 (MITSUBISHI DENKI K.K.) (11-05-1979) *The whole document* | 1-11, 13,15-17 | G 01 N 21/21 |
| X | FR-A-2 097 473 (E.DE BAZELAIRE) *Pages 2-4; figures 1-2* | 1,5,8 | |
| X | FR-A-2 204 302 (INST. MOLEKUL. BIOLOG. A. N. SSSR) *Pages 3-4; figures 1-2* | 1,6,8, 15 | |
| Y | US-A-2 861 493 (G.LANDEGREN) *Columns 5-6; figures 1-2* | 4,17, 18 | |
| Y | US-A-3 856 408 (J.HILL et al.) *Front page* | 1,5 | **TECHNICAL FIELDS SEARCHED (Int. Cl. ³)**<br><br>G 01 N 21/21<br>G 01 N 21/47<br>G 01 N 21/51 |
| Y | US-A-3 527 538 (R.ALLEN et al.) *Columns 2-3; figure 1* | 1,3 | |
| Y | REVUE DE PHYSIQUE APPLIQUEE, vol. 5, no. 2, April 1970, page 259-262, Paris (FR); H.DAMANY et al.: "Dispositif de mesure du dichroisme linéaire dans l'ultraviolet a˙ vide". *Page 260, figure 1* | 7,16 | |

-/-

The present search report has been drawn up for all claims

| Place of search | Date of completion of the search | Examiner |
|---|---|---|
| THE HAGUE | 20-08-1982 | BOEHM CH.E.D. |

0080540

European Patent
Office

EUROPEAN SEARCH REPORT

Application number

EP 81 30 5643

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| Y | FR-A-2 387 445 (IMPERIAL CHEMICAL IND.) *Pages 3-4; figure 1* | 5,13-14 | |
| | ----- | | |
| | | | **TECHNICAL FIELDS SEARCHED (Int. Cl. ³)** |

The present search report has been drawn up for all claims

| Place of search THE HAGUE | Date of completion of the search 20-08-1982 | Examiner BOEHM CH.E.D. |
|---|---|---|